# EUROPEAN PATENT APPLICATION

(11) **EP 4 729 554 A1**
(43) Date of publication of application: **22.04.2026**
(21) Application number: 25208994.1
(22) Date of filing: 15.10.2025
(51) Int. Cl.: C08G 18/40, C08G 63/127, C08G 63/668, C08L 67/00, C08L 71/02, C08G 18/22

(54) **ECOLOGICAL POLYOL COMPOSITION FOR THE PRODUCTION OF FLEXIBLE FOAM**

(30) Priority: 15.10.2024 EP 24206783
(71) Applicant: PCC ROKITA Spolka Akcyjna, 56-120 Brzeg Dolny (PL)
(72) Inventor: Salasa, Michal, 56-120 Brzeg Dolny (PL); Zarzycka, Karolina, 56-120 Brzeg Dolny (PL); Bartnicki, Lukasz, 51-114 Wroclaw (PL)

(57) **Abstract**

The invention relates to a polyol composition comprising A) a polyester polyol, wherein the polyester polyol has a functionality in the range of 2.1-3.0 and an average hydroxyl value of 160-300 mgKOH/g and is in an amount of 40-70 wt.% based on the weight of the polyol composition; and B) a polyether polyol, with an average functionality of 2.8-3.1, wherein the polyether polyol has an average hydroxyl value of 30-200 mgKOH/g and is in an amount of 30-60 wt.% based on the weight of the polyol composition; the polyol composition has an average hydroxyl value in the range of 120-170 mgKOH/g, an acid value of less than 0.5 mgKOH/g; for the production of viscoelastic foams. The invention also relates to a foam-forming composition comprising the polyol composition and to foams produced from these compositions.

## Description

### Field of invention

The invention relates to a polyol composition containing a polyester polyol made from ecological raw materials and a polyether polyol for the production of elastic, preferably viscoelastic foams. The invention also relates to a foam-forming composition containing a polyol composition and foams produced from these compositions.

### State of the art

The polyurethane industry, like the entire chemical industry, is increasingly seeking ecological solutions that reduce dependence on fossil fuels and CO₂ emissions. In the context of elastic polyurethane foams (used in furniture, mattresses, and insulation, for example), significant progress is being observed in the search for more sustainable raw materials, including bio-based polyols that can be introduced into the production of standard foams.

Some foam producers who decide to implement ecological raw materials (ecological materials) are faced with the need to implement them in their whole portfolio, which is an additional impetus to search for solutions also for viscoelastic foam (elastic foam, visco foam).

However, for visco foams, also known as foams with the effect of shape memory (*memory foam*), the situation is more complicated. These foams have specific properties, they respond to pressure and temperature, adapt to the user's body shape, require more precisely controlled structure and chemical parameters. For this reason, there are currently no widely available eco-friendly solutions dedicated exclusively to visco foams. The production of such foams relies on more advanced chemical compositions, which are more difficult to replace with bio-based raw materials or those derived from industrial waste.

Document EP3841140A1 describes the production of visco foam using polyesters and polyethers. Visco foam is characterized primarily by a recovery time of over 2 seconds, preferably over 4 seconds, and a resilience of up to 20%, preferably up to 15%. There is no information about the use of renewable raw materials/recyclates in the solutions. This method is dedicated to methylenediphenyl diisocyanate (MDI) solutions, which, given the specific nature of the elastic foam industry, presents significant application limitations. Almost every manufacturer of elastic polyurethane block foam uses toluene diisocyanate (TDI). MDI is typically used only for specialized solutions.

Document US10414859B2 describes a method for producing polyester polyols based on renewable raw materials/recyclates. This patent discloses a polyol with an acid value of approximately 5-30 mgKOH/g. At such high values, the use of these polyols in elastic foam compositions is difficult or practically impossible because it significantly reduces the catalytic properties of the polyurethane mixture. In extreme cases, it prevents the reactions necessary to form elastic polyurethane foam.

Document US6391935B1 discloses the use of polyester or polyether polyol in viscoelastic foam, as well as polyester or polyether monool. However, out of the 39 examples, there is none with the use of a polyester in viscoelastic foam. The detailed description of the invention also mentions the possibility of using polyesters, but only polyethers are described in detail, including their composition and properties. There is also no indication that any of the polyols used contains renewable raw materials.

EP3887419A1 discloses compositions for viscoelastic molded PUR foams comprising a polyester having a functionality of 2 and a hydroxyl value (OHV) of 50-150 mgKOH/g, a polyether having a functionality of 3 and a OHV of 20-40 mgKOH/g, optionally a second polyether having a functionality of 3 and a OHV of 180-250 mgKOH/g, and a block copolymer having a OHV of 25-45 mgKOH/g. However, in the document the polyester, although made from 69 wt.% organic components, is used in the polyol composition in an amount of only 20-30 wt.%, which makes the final organic component content very low - of the order of 13.8-20.7 wt.% in the polyol composition. Moreover, the polyester used has a functionality of 2, meaning it is a diol. The compounds with this structure lead to foams with lower hardness and can negatively impact the cross-linking process of the foam block and its post-production aging. This can result in a deterioration of the foam's mechanical properties, primarily the presence of permanent deformation. Furthermore, diols are more expensive to produce, increasing the cost of foam production. The embodiment examples do not specify the properties of the resulting foams, nor is there any mention of the possibility of block production.

The disadvantages of prior art solutions include: the lack or low content of polyols produced from ecological raw materials for use in viscoelastic foam compositions, the high viscosity of such polyol compositions, a high acid value, the lack of stability of such compositions over time, the inability to use MDI to produce viscoelastic foams, particularly in block foams, as well as limitations on the type of polyol and the higher cost of the polyols used. Furthermore, it is known that polyesters produced from ecological raw materials (renewable, recycled) often have an increased viscosity that prevents their use in polyurethane foams, particularly viscoelastic foams, and a characteristic, noticeable odor that is unacceptable in certain applications.

Therefore, there is a need for eco-friendly polyols for viscoelastic foam applications with higher content of eco-friendly raw materials, lower viscosity, lower acid value, improved stability and the possibility of using MDI to produce block foams.

Information on general methods for determining parameters such as: hydroxyl value, molecular weight, functionality, oxyethylene content, is contained in the book by M. lonescu "Chemistry and Technology of Polyols for Polyurethanes, 1st Ed.", Rapra Technology, Shrewsbury 2005, in chapter 3. "General Characteristics of oligo-polyols "on pages 31-49 and is hereby incorporated herein by reference in its entirety.

For the purposes of this invention, the following definitions apply:
Viscoelastic foams, also called visco or elastic or shape memory foams, include foams with the following parameter ranges: density 25-80 kg/m3, resilience up to 20%, recovery time greater than 2 seconds, and hardness 1.0-5.0 kPa. Block foam is a type of polyurethane foam produced in the form of large blocks, in a continuous production process. Typically, the block width is about 2 m, the block height is in the range of 0.5-1.3 m (0.5-1 m for visco foams), and the length is theoretically any, but in practice it depends on the application and factory capabilities, usually in the range of 2-60 m.

A renewable, biobased raw material is a natural material that can be continuously replenished through natural processes, so its resources are not depleted in the long term if properly managed. Examples of renewable raw materials suitable for this invention include castor oil.

A recyclate is a material obtained through a recycling process, i.e., processing waste for reuse as raw materials in the production of new products. Examples of recyclates suitable for the present invention include polyterephthalates, preferably polyethylene terephthalate (PET), and adipic acid.

ECO raw materials are ecological raw materials (ecological materials), which include the recyclates and renewable raw materials mentioned above.

The composition according to the invention is a physical mixture, hereinafter referred to as a composition or also a physical hybrid or hybrid, meaning a mixture in which the components are not bound to each other by chemical bonds.

A hybrid technology means the use of polyether polyols and polyester polyols in one product by physically mixing them.

A base polyol means a composition of polyester polyol and polyether polyol, which is the basis of the composition for producing foam (i.e. foam-forming composition) which is the most decisive for the final physicomechanical properties of the foam.

### The summary of the invention

In a first aspect, the subject of the invention is a polyol composition for viscoelastic foams containing:
A) a polyester polyol, wherein the polyester polyol has a functionality in the range of 2.1-3.0 and an average hydroxyl value of 160-300 mgKOH/g and is in an amount of 40-70 wt.% relative to the weight of the polyol composition,
B) a polyether polyol, with an average functionality of 2.8-3.1, wherein the polyether polyol has an average hydroxyl value of 30-200 mgKOH/g and is in the amount of 30-60 wt.% relative to the weight of the polyol composition,
wherein the polyol composition has an average hydroxyl value in the range of 120-170 mgKOH/g, an acid value below 0.5 mgKOH/g.

Preferably, the polyol composition contains more than 19 wt.% of ecological raw materials, preferably more than 22 wt.%, based on the weight of the polyol composition.

Preferably in the polyol composition the polyester polyol A is made from a reaction mixture comprising castor oil in an amount of 5-20 wt.% and/or recycled polyethylene terephthalate (PET) in an amount of 20-40 wt.% of the reaction mixture, preferably 8-15 wt.% of castor oil and/or 25-35 wt.% of recycled polyethylene terephthalate.

Preferably, the polyol composition contains
C) zinc neodecanoate in the amount of 0-1 wt.% relative to the weight of the polyol composition,

Preferably in the polyol composition the polyether polyol contains more than 60 wt.% of alkylene oxide, preferably more than 70 wt.% of ethylene oxide.

Preferably in the polyol composition the polyester polyol A has a hydroxyl value in the range of 160-250 mgKOH/g, preferably 180-220 mgKOH/g.

Preferably in the polyol composition the polyether polyol B comprises:
- at least one first polyol a B1 polyether with an average functionality of 3, characterized by an average hydroxyl value of 140-180 mgKOH/g and an average ethylene oxide content of more than 70 wt.%, being in an amount of 20-40 wt.% relative to the weight of the polyol composition; and
- at least one second polyether polyol B2 having an average hydroxyl value of 30-50 mgKOH/g and an average ethylene oxide content of more than 70 wt.%, being in an amount of 5-20 wt.% based on the weight of the polyol composition.

In a further aspect, the subject of the invention is a foam-forming composition containing:
- the polyol composition as described above,
- water;
- an amine catalyst
- a silicone surfactant
- an isocyanate
- a tin catalyst

and at least one additional polyether polyol selected from the following:
   - polyol B3: being a copolymer of ethylene oxide and propylene oxide with an average molecular weight of 4000-6000 g/mol and an ethylene oxide content of 70-80 wt.% relative to the weight of polyol B3;
   - polyol B4: being a copolymer of ethylene oxide and propylene oxide with an average molecular weight of 3000-4000 g/mol and an ethylene oxide content of up to 15 wt.% relative to the weight of polyol B4;
   - polyol B5: being a polymeric polyol, a dispersion of a copolymer of styrene and acrylonitrile in a copolymer of ethylene oxide and propylene oxide with an average molecular weight of 3000-4000 g/mol and an ethylene oxide content of up to 15 wt.% and a dispersion content of 38-49 wt.% based on the weight of polyol B5;
   - polyol B6: being a block copolymer of ethylene oxide and propylene oxide with an average molecular weight of 5000-6500 g/mol and an ethylene oxide content of up to 10-25 wt.% relative to the weight of polyol B6;
   - polyol B7: being a copolymer of ethylene oxide and propylene oxide with an average molecular weight of 1200-2000 g/mol and an ethylene oxide content of up to 40-65 wt.% relative to the weight of polyol B7;
   - polyol B8: being a copolymer of ethylene oxide, propylene oxide and castor oil with an average molecular weight of 2800-4000 g/mol and an ethylene oxide content of 10-35%; and a castor oil content of up to 40 wt.% relative to the weight of polyol B8;
and optionally a crosslinking agent.

Preferably, the foam-forming composition contains ecological raw materials in an amount exceeding 7 wt.% of the foam-forming composition, preferably in an amount of 7-20 wt.%.

In a further aspect, the subject of the invention is a polyurethane foam prepared using the polyol composition or the foam-forming composition as described above, with the following parameters:
- density: 35-60 kg/m³
- hardness CV40: 1.0-5.0 kPa
- recovery time: over 3 s
- air flow: above 0.2 dm3/s
- resilience: below 15%
- tensile strength: above 100 kPa
- elongation at break: above 150%.
wherein the polyurethane foam contains ecological raw materials in the amount of 5-20 wt.% of the foam.

Preferably, the polyurethane foam is a viscoelastic foam, preferably a block viscoelastic foam.

### Advantages of the invention

The composition of the invention offers a number of advantages not found in a single solution in invention known from the state of the art. The present invention proposes the use of a polyol composition with an average acid value of less than 0.5 mgKOH/g, which enables its use in such demanding applications.

The invention enables the production of viscoelastic foam using a polyol composition (physical mixture) with an ECO raw material content above 19 wt.%, i.e. recycled raw materials and renewable natural raw materials.

The invention is a physical mixture (hereinafter referred to as a hybrid mixture, physical hybrid or a hybrid) of at least two polyols with a polyester and polyether structure, respectively. Such hybrids are difficult to develop, as the vast majority of commercially available polyether polyols do not form stable, homogeneous mixtures with polyester polyols. This is particularly true for the most widely used triol with an average molecular weight (MW) of 3000-4000 g/mol and an ethylene oxide content of up to 20 wt.%. It was necessary to develop a dedicated polyol composition (base polyol).

The PCC solution is based on the development of a unique composition of polyester polyol and polyether polyol, which creates a long-term stable mixture and has a lower viscosity than the solutions of the state of the art. This facilitates, and in principle enables, the foaming process of viscoelastic (flexible, visco) foam, while maintaining a simple composition that can be implemented on a commercial scale. Currently, there are no known solutions for visco foams that utilize a polyol composition containing a high percentage of recycled and/or renewable raw materials. However, using only polyester polyol presents a significant challenge due to its high viscosity, which often exceeds 10,000 mPas. On an industrial scale, most machines for producing elastic block foam lack appropriate pumps and a dedicated mixing head.

The key advantage of using hybrid technology is the possibility of obtaining a polyol composition with reduced viscosity compared to the polyester polyol used, i.e. 2000 mPas for the composition according to the invention vs. 3500 mPas for polyester polyol A. Most dosing lines in machines for producing elastic foam using continuous block technology are not adapted to viscosities above 6000 mPas or even 3000 mPas. The use of a higher viscosity polyol is associated with lower pump efficiency or even the risk of immobilization.

The disclosed invention also allows for the production of viscoelastic (visco) foam from renewable raw materials/recyclates without the need to use a polyol from recycled polyurethane (PUR) foam. PUR foam recyclate is difficult to obtain. For example, in Poland there is only one facility for processing PUR foam production waste into polyol, and there are only a few such facilities worldwide.

The invention is a response to the growing demand for products related to sustainable development. Using hybrid technology, a polyol composition with good application parameters has been achieved, i.e., ease of implementation on a technical scale while maintaining a simple composition. Furthermore, a viscoelastic (visco) foam was developed, characterized by very good physicomechanical parameters, listed below, consistent with the expectations of processors and end consumers.

It turned out unexpectedly that the combination of the presence of large amounts of organic raw materials (ingredients) and polyether polyol with the specified parameters improved both the physicochemical properties of the polyol composition, such as lower acid value, lower viscosity, homogeneity, and stability of the composition, and enabled the production of viscoelastic foams with properties desired by end users. An additional advantage is the lower cost of producing such eco-friendly compositions and foams compared to standard technologies using polyols from recycled polyurethane foam. Furthermore, it has been unexpectedly found that the composition according to the invention is suitable for use in both MDI- and TDI-based foams, particularly block foams.

### Detailed description of the invention

The subject of the invention in its first aspect is a hybrid polyol composition, i.e. a mixture of a polyester polyol and a polyether polyol produced in the form of a homogeneous mixture based on renewable raw materials/recyclates, hereinafter referred to as a polyol composition or a polyol.

A polyester polyol is a type of polymer with an ester structure that contains multiple hydroxyl (-OH) groups. Polyester polyols are produced by the condensation of di- or polycarboxylic acids (e.g., adipic acid) with polyhydric alcohols. The polyester polyol contained in the composition of the invention is produced by methods known to those skilled in the art. Preferably, the polyester polyol is made from castor oil and recycled polyethylene terephthalate and alcohols including glycols, in particular triethylene glycol (TEG) and trimethylolpropane glycol (TMP).

A polyether polyol is a type of polymer containing multiple hydroxyl (-OH) groups. It is produced by the polymerization of ethylene oxide, propylene oxide, or both with polyhydric alcohols.

The examples of polyether polyols present in the polyol composition (base polyol) include copolymers of propylene oxide and ethylene oxide on a glycerine-type starter. The polyether polyol may be a single-component polyol with the parameters given below or may be a mixture of at least two polyether polyols, which on average have the parameters as described below. Preferably, the polyether polyol in the polyol composition according to the invention is a mixture of at least two polyether polyols, it may also be a mixture of three or more polyether polyols.

The polyol composition of the invention is prepared by mixing together:
- a polyester polyol, hereinafter referred to as component A, preferably produced from a reaction mixture comprising castor oil in an amount of 5-20 wt.% and/or PET recyclate in an amount of 20-40 wt.% relative to the weight of the reaction mixture, characterized by an average hydroxyl value in the range of 160-300 mgKOH/g, an average functionality in the range of 2.1-3.0 and being in an amount of 30-60 wt.% relative to the weight of the polyol composition
- a polyether polyol, hereinafter referred to as component B, with an average functionality of 3, having an average hydroxyl value of 30-200 mgKOH/g and an average ethylene oxide content of more than 60 wt.%, wherein the polyether polyol is in the amount of 40-60 wt.% relative to the weight of the polyol composition,
wherein in particular, preferably the polyether polyol may be a mixture of B1 and B2, which are:
- a polyether polyol, hereinafter referred to as component B1, with an average functionality of 3, characterized by an average hydroxyl value of 165 mgKOH/g and an average ethylene oxide content of 75 wt.%, being in the amount of 20-40 wt.% relative to the weight of the polyol composition
- a polyether polyol, hereinafter referred to as component B2, with an average functionality of 3, characterized by an average hydroxyl value of 34 mgKOH/g and an average ethylene oxide content of 75 wt.%, being in the amount of 5-20 wt.% relative to the weight of the polyol composition
wherein one polyether polyol can be used instead of B1 and B2, having average parameters such as in a combination of e.g. B1 and B2 or other polyether polyols
- optionally zinc neodecanoate, hereinafter referred to as component C, in an amount of 0-1 part by weight based on the weight of the polyol composition.

The subject of the invention is also a foam-forming composition and a method for producing a viscoelastic polyurethane foam with the properties described herein, using the polyol composition according to the invention (polyol) in an amount of approximately 100 parts of the polyol composition, approximately 30-40 parts by weight of isocyanate, silicone surfactant, water, amine catalysts, organometallic catalysts and optionally crosslinking agents.

### Examples

The ingredients used are obtained by the methods below or obtained commercially.

### Polyesters

As a polyester polyol (A), a polyester polyol has been used obtained by standard methods known in the art in a reaction mixture containing: castor oil in an amount of up to 10 wt.% and/or PET derived entirely from recycling in an amount of up to 30 wt.% relative to the weight of the reaction mixture, and an appropriate alcohol.

### Example Polyester A1

### a) Polycondensation

In the reactor 192 g of trimethylolpropane (TMP), 306 g of polyethylene terephthalate (PET), and 411 g of triethylene glycol (TEG) are subjected to a polycondensation process. After introducing the raw materials, raise the temperature to 100-120°C. Next, load the catalyst tetraisopropyl titanate (TPT) dissolved in 10 g of TEG and heat the reactor to the esterification and condensate collection temperature (vacuum, 170-220°C, maintaining the column top temperature at 96-98°C). After receipt - intermediate la should have an acid value in the range of 20.0 mgKOH/g, hydroxyl value 225 mgKOH/g, viscosity at 25°C 1500 mPas, water content - <0.2%; after this stage, the temperature should be raised to 250°C, temperature at the column top >100°C. After receipt - intermediate Ib should have an acid value in the range of 9-10 mgKOH/g, hydroxyl value 220 mgKOH/g, viscosity at 25°C 2000 mPas, water content - 0.15%. Next, intermediate Ila (proper polyesterification) should be collected - after collecting approx. 55.0 g of intermediate Ila, the product is characterized by the following parameters: acid value: <1.0 mgKOH/g, hydroxyl value 195-215 mgKOH/g, viscosity at 25°C 2300-3000 mPas, water content <0.10%. The product requires removal of residual volatile components under vacuum. When the acid value is obtained in the range is <1.0 mgKOH/g in the process, intermediate IIb should be collected - approx. 0.8 g, until the appropriate acid value is obtained: max. 0.50 mgKOH/g. Polyester A1 - acid value: max. 0.50 mgKOH/g, functionality 2.3, hydroxyl value 190-210 mgKOH/g, viscosity at 25°C 2500-4500 mPas, water content <0.10 wt.%. Polyester A1 is odorless or has a low-intensity, nonirritating, non-tiring odor.

### Example Polyester A2

### b) Polycondensation

In the reactor 263 g of trimethylolpropane (TMP), 300 g of polyethylene terephthalate (PET), and 400 g of triethylene glycol (TEG) are subjected to a polycondensation process. After introducing the raw materials, raise the temperature to 100-120°C. Then load the TPT catalyst dissolved in 10 g of TEG, and heat the reactor to the esterification and condensate collection temperature (vacuum, 170-220°C, maintaining the temperature at the column top at 96-98 °C). After collection, intermediate la should have an acid value in the range of 20.0 mgKOH/g, a hydroxyl value of 240 mgKOH/g, viscosity at 25°C of 5000 mPas, and water content of <0.2%; after this stage, the temperature should be raised to 250°C, with a column top temperature of >100°C. After collection, intermediate Ib should have an acid value of 9-10 mgKOH/g, a hydroxyl value of 230 mgKOH/g, a viscosity at 25°C of 5500 mPas, and a water content of 0.15%. Next, intermediate IIa (proper polyesterification) should be collected. After collecting approximately 67.7g of intermediate IIa, the product should have the following parameters: acid value of <1.0 mgKOH/g, a hydroxyl value of 207-225 mgKOH/g, a viscosity at 25°C of 6200-9000 mPas, and a water content of <0.10%. The product requires removal of residual volatile components under vacuum. When the acid value is obtained in the range is <1.0 mgKOH/g, intermediate IIb should be collected - approx. 0.35 g, until the appropriate acid value is obtained: max. 0.50 mgKOH/g. Polyester A2 - acid value: max. 0.50 mgKOH/g, functionality 2.7, hydroxyl value 205-225 mgKOH/g, viscosity at 25°C 6000-9000 mPas, water content <0.10% wt.

### Example Polyester A3

### c) Polycondensation

In the reactor, 150 g of adipic acid (AA), 80 g of terephthalic acid (TPA), 100 g of trimethylolpropane (TMP), 300 g of polyethylene terephthalate (PET), 120 g of diethylene glycol (DEG), and 250 g of triethylene glycol (TEG) are subjected to the polycondensation process. After introducing the raw materials, the temperature is raised to 100-120°C. Next, the TPT catalyst dissolved in 10 g of TEG is loaded (at atmospheric pressure), and the reactor is heated to the esterification and condensate collection temperature (vacuum, 170-220°C, maintaining the temperature at the top of the column at 96-98°C). After receipt - intermediate la should have an acid value in the range of 20.0 mgKOH/g, hydroxyl value 280 mgKOH/g, viscosity at 25°C 5500 mPas, water content - <0.2%; after this stage, the temperature should be raised to 250°C, temperature at the column top >100°C. After receipt - intermediate I b should have an acid value in the range of 9-10 mgKOH/g, hydroxyl value 270 mgKOH/g, viscosity at 25°C 6000 mPas, water content - 0.15%. Next, intermediate IIa (proper polyesterification) should be collected - after collecting approx. 56.5g of intermediate IIa, the product is characterized by the following parameters: acid value: <1.0 mgKOH/g, hydroxyl value 260-275 mgKOH/g, viscosity at 25°C 6500-9500mPas, water content <0.10%. The product requires removal of residual volatile components under vacuum. When the acid value is obtained in the range is <1.0 mgKOH/g in the process, intermediate IIb should be collected - approx. 0.70 g, until the appropriate acid value is obtained: max. 0.50 mgKOH/g. Polyester A3 - acid value: max. 0.50 mgKOH/g, functionality 2.7, hydroxyl value 255-275 mgKOH/g, viscosity at 25°C 7000-10000 mPas, water content <0.10% wt.

### Polyethers

The following polyether polyols are used in the compositions according to the invention:
B1 - a polyether polyol with an average functionality of 3, characterized by an average hydroxyl value of 165 mgKOH/g and an average ethylene oxide content of 75 wt.%,
B2 - a polyether polyol with an average functionality of 3, characterized by an average hydroxyl value of 34 mgKOH/g and an average ethylene oxide content of 75 wt.%.

Other ingredients:
C - zinc neodecanoate

### Examples 1-3 - preparation of polyol compositions according to the invention

- Example 1
   48 wt.% of component A1
   37 wt.% of component B1
   15 wt.% of component B2
   0.1 wt.% of component C
- Example 2
   62 wt.% of component A1
   26 wt.% of component B1
   12 wt.% of component B2
   0.09 wt.% of component C
- Example 3
   60 wt.% of component A1
   30 wt.% of component B1
   10 wt.% of component B2

Properties of polyol compositions :
Appearance at 25°C - homogeneous, clear liquid, may be opalescent
Acid value: up to 0.5 mgKOH/g
Water: up to 0.1% (w/w)
Content of ECO raw materials: for P1 - 19%, P2 - 25% - and P3 - 24%

Table 1 shows the composition (in wt. %) and properties of the polyol compositions of the invention.

**Table 1**

| Composition | P1 | P2 | P3 |
|---|---|---|---|
| A1 (% wt) | 48 | 62 | 60 |
| B1 (% wt) | 37 | 26 | 30 |
| B2 (% wt) | 15 | 12 | 10 |
| C (% wt) | 0.1 | 0.09 | |
| Appearance | homogeneous, clear liquid, may be opalescent | | |
| Hydroxyl value (mgKOH/g) | 135 | 155 | 145 |
| Acid value (mgKOH/g) | < 0.5 | < 0.5 | < 0.5 |
| Dynamic viscosity (mPas at 25°C) | 1600 | 2000 | 1900 |
| Cont. of organic raw materials (% wt.) | 19 | 25 | 24 |

Compositions prepared based on A2 and A3 polyesters have properties comparable to the parameters of the composition based on A1 polyester. They only have increased viscosity.

### Brief description of the figures

The subject of the invention in an embodiment is illustrated in the figure:
Fig. 1 shows the compositions after 30 days stored at 18-26 °C:
Vial No. 1 - the polyester polyol made according to example A1 mixed with polyol B4 (a polyol known in the state of the art, described below) in a ratio of 62:38 w/w.
Vial No. 2 - the hybrid polyol made according to example P2 of the invention.

It is clear that the composition in vial no. 1 has become cloudy and separated, making it unsuitable for long-term storage. Therefore, selecting the appropriate polyether polyols in combination with polyester polyol is not accidental.

### Examples 4-11 - preparation of viscoelastic foam

The viscoelastic foams in Examples 4-11 were prepared using the following components, wherein polyols B3-B8 are polyols known in the art and commonly used in foam compositions:
- the polyol composition (the polyol) according to one of examples 1-3
- polyol B3: a standard "cell opener", being a copolymer of ethylene oxide and propylene oxide with an average molecular weight of 4000-6000 g/mol and an ethylene oxide content of 70-80 wt.% relative to the weight of polyol B3;
- polyol B4: a standard polyol, copolymer of ethylene oxide and propylene oxide with an average molecular weight of 3000-4000 g/mol and an ethylene oxide content of up to 15 wt.% relative to the weight of polyol B4;
- polyol B5: a standard polymeric polyol, dispersion of a copolymer of styrene and acrylonitrile in a copolymer of ethylene oxide and propylene oxide with an average molecular weight of 3000-4000 g/mol and an ethylene oxide content of up to 15 wt.% and a dispersion content of 38-49 wt.% based on the weight of polyol B5;
- polyol B6: a reactive polyol, block copolymer of ethylene oxide and propylene oxide with an average molecular weight of 5000-6500 g/mol and an ethylene oxide content of up to 10-25 wt.% relative to the weight of polyol B6;
- polyol B7: a copolymer of ethylene oxide and propylene oxide with an average molecular weight of 1200-2000 g/mol and an ethylene oxide content of up to 40-65 wt.% relative to the weight of polyol B7;
- polyol B8: a copolymer of ethylene oxide, propylene oxide and castor oil with an average molecular weight of 2800-4000 g/mol and an ethylene oxide content of 10-35%; and a castor oil content of 40 wt.% based on the weight of polyol B8;
- water: distilled water;
- an amine 1: foaming amine Dabco ^{®} BL-11 (Evonik)
- an amine 2: gelling amine Dabco ^{®} 33-LV (Evonik)
- a surfactant: silicone surfactant Tegostab ^{®} BF 2370 (Evonik);
- TDI - toluene diisocyanate; a mixture of isomers, i.e. 2,4-toluene diisocyanate and 2,6-toluene diisocyanate in a ratio of 80:20;
- MDI - a mixture of methylenediphenyl diisocyanate and polymeric methylenediphenyl diisocyanate Ongronat ^{®} TR4040 (BorsodChem);
- a cross-linking agent: Rokopol ^{®} X30 (PCC Rokita);
- a tin catalyst: Kosmos^{®} T-9 (Evonik)

Table 2 below presents the parameters of the foams obtained according to the invention. The content is expressed in pphp (*parts per hundred parts of polyol*) means the weight parts of a given component relative to the total of 100 parts of polyol. This representation of foam compositions is commonly used in the art.

**Table 2**

| Example | 4 | 5 | 6 | 7 | 8 | 9 | 10 | 11 |
|---|---|---|---|---|---|---|---|---|
| Polyol P2 [ pphp ] | 85 | 85 | 85 | 80 | 80 | 70 | 45 | 80 |
| Polyol B3 [ pphp ] | - | - | - | - | - | - | 35 | - |
| Polyol B4 [ pphp ] | - | 15 | - | 10 | - | - | 20 | 20 |
| Polyol B5 [ pphp ] | - | - | 15 | 10 | - | - | - | - |
| Polyol B6 [ pphp ] | 15 | - | - | - | - | - | - | - |
| Polyol B7 [ pphp ] | - | - | - | - | - | 30 | - | - |
| Polyol B8 [ pphp ] | - | - | - | - | 20 | - | - | - |
| TDI [ pphp ] | 37.6 | 38.0 | 35.1 | 37.7 | 36.9 | - | - | - |
| MDI [ pphp ] | - | - | - | - | - | 57.0 | 46.1 | 64.4 |
| Isocyanate index | 90 | 90 | 93 | 90 | 94 | 90 | 86 | 88 |
| Water added [ pphp ] | 1.70 | 1.70 | 1.75 | 2.05 | 1.45 | 2.05 | 1.85 | 2.50 |
| Amine 1 [ pphp ] | 0.02 | 0.02 | 0.12 | 0.02 | - | 0.07 | 0.10 | 0.10 |
| Amine 2 [ pphp ] | 0.06 | 0.06 | | 0.20 | 0.25 | 0.21 | 0.10 | 0.10 |
| Surfactant [ pphp ] | 1.20 | 1.20 | 1.20 | 1.20 | 1.20 | 1.20 | 1.00 | 1.00 |
| Crosslinking agent [ pphp ] | 0.91 | 0.91 | 0.76 | 0.76 | 1.00 | 0.76 | 0.76 | 0.76 |
| Tin catalyst [ pphp ] | 0.04 | 0.04 | 0.03 | 0.03 | 0.03 | - | - | 0.04 |
| Density [kg/m ³] | 42.3 | 44.3 | 47.8 | 44.5 | 51.0 | 47.0 | 54.1 | 37.8 |
| Hardness [ kPa ] | 2.5 | 2.0 | 1.8 | 2.4 | 2.1 | 3.4 | 1.8 | 3.5 |
| Recovery time [s] | 77 | 30 | 10 | 14 | 5 | 11 | 3 | 120 |
| Resilience [%] | 5 | 5 | 4 | 6 | 8 | 4 | 9 | 3 |
| Air flow [dm³/min] | 1.2 | 1.8 | 2.0 | 2.9 | 0.28 | 0.10 | 0.85 | 1.23 |
| ECO ingredient content [% wt. of all polyols ] | 21.3 | 21.3 | 21.3 | 20.0 | 20.0 | 17.5 | 11.3 | 20.0 |
| Content of ECO ingredients in the foam [% wt.] | 15.0 | 15.0 | 15.3 | 14.1 | 14.2 | 10.9 | 7.5 | 11.8 |
| Tensile strength (kPa) | 195 | 174 | 189 | 142 | 248 | 177 | 225 | 188 |
| Elongation at break [%] | 292 | 231 | 258 | 204 | 341 | 203 | 295 | 251 |

Foam properties:
- odorless
- density: 35-60 kg/m³
- hardness CV40: 1.0-5.0 kPa
- recovery time: over 3 s
- air flow: above 0.2 dm³/s
- resilience: below 15%
- tensile strength: above 100 kPa
- elongation at break: over 150%

Isocyanate index represents the stoichiometric percentage of isocyanates in the composition relative to other reactants. If the index value is 100, the amounts of TDI and the reactants are stoichiometrically equal; if the index value is below 100, there is a stoichiometric isocyanate deficiency; if the index value is above 100, there is a stoichiometric isocyanate excess in the composition.

Polyols and all additives except isocyanate (TDI and/or MDI) were mixed together in a 1-liter vessel for 30 seconds at a mixer speed of 3500 rpm. The isocyanate was then added and mixed for another 7 seconds. The mixture was poured into a paper mold. The foams were conditioned for 1 hour at 100°C and then for 47 hours at ambient temperature (20-24°C).

### Example 12 - preparation of block viscoelastic foam

The foam was produced on an industrial (block) scale using a high-pressure continuous production machine using the following process parameters:
- conveyor speed: 4.4 m/min.
- pressure in the mixing head: 0.8 bar
- raw material temperature 20-21°C
- mixerhead rotation speed 3500 rpm.

The raw materials were dosed according to the following composition given in Table 3.

**Table 3**

| Example | P12 |
|---|---|
| Polyol P2 [kg/min] | 120.9 |
| Polyol B3 [kg/min] | 14.0 |
| Polyol B4 [kg/min] | 20.2 |
| Polyol B5 [kg/min] | - |
| Polyol B6 [kg/min] | - |
| Polyol B7 [kg/min] | - |
| Polyol B8 [kg/min] | - |
| TDI [kg/min] | 58.9 |
| MDI [kg/min] | - |
| Water added [kg/min] | 2.70 |
| Amine 1 [kg/min] | 0.47 |
| Amine 2 [kg/min] | 0.078 |
| Surfactant [kg/min] | 2.79 |
| Crosslinking agent [kg/min] | - |
| Tin catalyst [kg/min | 0.035 |

Foam blocks with the following parameters were obtained:
- width: 200 cm
- height: 75 cm
- length of sections cut during production: 200 cm

After 48 hours of seasoning at ambient temperature, the blocks maintained their dimensional stability (+/- 2 cm).

The foams were tested and the following parameters were obtained in Table 4.

**Table 4**

| | |
|---|---|
| Density [kg/m ³] | 47.14 |
| Hardness [ kPa ] | 1.38 |
| Recovery time [s] | 11 |
| Resilience [%] | 3 |
| Air flow [dm3/min] | 1.1 |

The parameters characterizing polyols and foams were determined in accordance with the following standards/methods:
Average molecular weight means the weight average molecular weight determined by gel permeation chromatography - GPC (*Gel Permeation Chromatography*) based on a polystyrene standard.

The average functionality of a polyol is the average number of OH groups per molecule. It is calculated from the average molecular weight and the hydroxyl value.

Hydroxyl value (OHV): determined according to ASTM D4274-16, method D:
A polyol sample should be weighed in a *twist-off* jar using the formula: m=280/OHV (expected). If nothing is known about the sample, approximately 5 g of the sample should be weighed. For polymeric polyols, the weight should not exceed 2 g.

A known amount of the phthalate mixture is added to the sample, placed in a water bath at 100°C, and boiled for 15 minutes. After cooling, the sample is added a known amount of aqueous NaOH solution and titrated with the standard aqueous KOH solution. Titration is performed potentiometrically using a titrator with an electrode that measures the potential jump. The results are calculated according to a predefined algorithm in the device software. At least two determinations must be performed.

Acid value: ASTM D7253-16, bromothymol blue:
Approximately 10 g of polyol is weighed, and a known amount of a 1:1 ethanol:water mixture (v/v) is added. If the sample does not dissolve, an ethanol:toluene mixture prepared in the same volume ratio is used. After the sample has dissolved, approximately 3 drops of phenolphthalein are added and visual titration is performed with an aqueous KOH solution. At least two determinations should be performed.

Dynamic viscosity: determined in accordance with ASTM D4672-18.

One drop of the polyol sample is applied to a plate thermostated at 25 °C. The cone is pressed down and the measurement is taken.

Water content: determined in accordance with ASTM D4878-15, method A:
Analysis is performed using a Karl Fisher volumetric titrator. A polyol sample is weighed on an analytical balance. The weight depends on the expected water content: the more water, the lower the weight. The sample is added to Solvent G and stirred until completely dissolved. The solution is then titrated with Hydra Point 2.0 reagent. The results are calculated according to a predefined algorithm in the device's software. At least two determinations must be performed.

### Density:

Porous rubbers and plastics. Determination of apparent (bulk) density. Standard PN-EN ISO 845/October 2000.

Description: A sample measuring 10 cm x 10 cm and 5 cm high is measured with a caliper and weighed.

### Hardness:

Elastic porous plastics. Determination of stress-strain characteristics in compression. Standard PN-EN ISO 3386-1/August 2000.

Description: A sample measuring 10 cm x 10 cm and 5 cm high is compressed by 40%; at this value the force required to compress is measured.

### Recovery time:

It is determined according to the modified IOS-MAT-0076 method (in the original method, the sample size is 15x15x15 cm). A 10x10x10 cm foam is compressed by a testing machine plate by 75% along the growth direction, after 1 minute the force is released and the time required to recover to 90% of the original shape is measured (using a stopwatch).

### Resilience:

Elastic porous plastics. Determination of elasticity. Standard PN-EN ISO 8307/October 2000.

Description: A 16 mm diameter steel ball is dropped from the height of 50 cm onto a sample of 10 cm x 10 cm dimensions and 5 cm height. Resilience is the percentage of the height to which the ball bounces back after being bounced off the foam.

### Air flow:

Elastic porous plastics. Determination of air flow at constant pressure drop. PN-EN ISO 7231:2000 standard

Description: A sample of 52x52x25 mm dimensions is placed in a device that generates a constant pressure difference. The airflow rate required to maintain this pressure difference is assumed as the airflow rate. The flow measurement is performed automatically until a constant pressure drop of 125 ± 1 Pa is achieved.

The description refers to average values, which refer to the average values resulting from the mixtures. The resulting composition will have average parameters, depending on the properties and content of the components forming it.

Table 2 shows that the use of polyols according to the invention enables the use of ecological raw materials in the process of manufacturing viscoelastic (flexible, visco) foam. The results obtained indicate good or very good physicomechanical properties. In particular, the foams produced using the polyol composition according to the invention have improved resilience and elongation at break, as well as recovery time, compared to the foams in US6391935B1. In particular, the resilience in the foams according to the present invention is below 9%, while in US6391935B1 it is above 10% (even 14% in some examples), while the elongation at break is well above 200% and even above 300% in the present invention, while in US6391935B1 it is usually below or slightly above 200%. In turn, the recovery time in the foams according to the invention is higher than the desired 3 s, preferably between 3 and 12 s, even above 20 s, although such long times are used in highly specialized applications.

Example 12 confirms the possibility of obtaining the above foam in block form using a continuous production method, which has not been possible so far with the polyol compositions know from the state of the art.

## Claims

1. A polyol composition for viscoelastic foams containing:
A) a polyester polyol, wherein the polyester polyol has a functionality in the range of 2.1-3.0 and an average hydroxyl value of 160-300 mgKOH/g and is in an amount of 40-70 wt.% relative to the weight of the polyol composition,
B) a polyether polyol, with an average functionality of 2.8-3.1, wherein the polyether polyol has an average hydroxyl value of 30-200 mgKOH/g and is in the amount of 30-60 wt.% relative to the weight of the polyol composition,
wherein the polyol composition has an average hydroxyl value in the range of 120-170 mgKOH/g, an acid value below 0.5 mgKOH/g.

2. The polyol composition according to claim 1, wherein the composition contains more than 19 wt.% of ecological raw materials, preferably more than 22 wt.%, based on the weight of the polyol composition.

3. The polyol composition according to claim 1 or 2, wherein the polyester polyol A is prepared from a reaction mixture comprising castor oil in an amount of 5-20 wt.% and/or recycled polyethylene terephthalate (PET) in an amount of 20-40 wt.% of the reaction mixture, preferably 8-15 wt.% of castor oil and/or 25-35 wt.% of recycled polyethylene terephthalate.

4. The polyol composition of any one of claims 1-3, wherein the composition comprises C) zinc neodecanoate in the amount of 0-1 wt.% relative to the weight of the polyol composition,

5. The polyol composition of any one of claims 1-4, wherein the polyether polyol contains more than 60 wt.% of alkylene oxide, preferably more than 70 wt.% of ethylene oxide.

6. The polyol composition according to any one of claims 1-5, wherein the polyester polyol A has a hydroxyl value in the range of 160-250 mgKOH/g, preferably 180-220 mgKOH/g.

7. The polyol composition of any one of claims 1-6, wherein the polyether polyol B includes:
- at least one first polyether polyol B1 with an average functionality of 3, **characterized by** an average hydroxyl value of 140-180 mgKOH/g and an average ethylene oxide content of more than 70 wt.%, being in an amount of 20-40 wt.% relative to the weight of the polyol composition; and
- at least one second polyether polyol B2 having an average hydroxyl value of 30-50 mgKOH/g and an average ethylene oxide content of more than 70 wt.%, being in an amount of 5-20 wt.% based on the weight of the polyol composition.

8. A foam-forming composition containing:
- the polyol composition according to any one of claims 1-7,
- water;
- an amine catalyst
- a silicone surfactant
- an isocyanate
- a tin catalyst
and at least one additional polyether polyol selected from the following:
- polyol B3: being a copolymer of ethylene oxide and propylene oxide with an average molecular weight of 4000-6000 g/mol and an ethylene oxide content of 70-80 wt.% relative to the weight of polyol B3;
- polyol B4: being a copolymer of ethylene oxide and propylene oxide with an average molecular weight of 3000-4000 g/mol and an ethylene oxide content of up to 15 wt.% relative to the weight of polyol B4;
- polyol B5: being a polymeric polyol, a dispersion of a copolymer of styrene and acrylonitrile in a copolymer of ethylene oxide and propylene oxide with an average molecular weight of 3000-4000 g/mol and an ethylene oxide content of up to 15 wt.% and a dispersion content of 38-49 wt.% based on the weight of polyol B5;
- polyol B6: being a block copolymer of ethylene oxide and propylene oxide with an average molecular weight of 5000-6500 g/mol and an ethylene oxide content of up to 10-25 wt.% relative to the weight of polyol B6;
- polyol B7: being a copolymer of ethylene oxide and propylene oxide with an average molecular weight of 1200-2000 g/mol and an ethylene oxide content of up to 40-65 wt.% relative to the weight of polyol B7;
- polyol B8: being a copolymer of ethylene oxide, propylene oxide and castor oil with an average molecular weight of 2800-4000 g/mol and an ethylene oxide content of 10-35%; and a castor oil content of up to 40 wt.% relative to the weight of polyol B8;
and optionally a crosslinking agent.

9. The foam-forming composition according to claim 8, containing ecological raw materials in an amount of more than 7 wt.% of the foam-forming composition, preferably in an amount of 7-20 wt.%.

10. A polyurethane foam prepared using the polyol composition according to any one of claims 1-7 or the foam-forming composition according to any one of claims 8-9, with the following parameters:
- density: 35-60 kg/m³
- hardness CV40: 1.0-5.0 kPa
- recovery time: over 3 s
- air flow: above 0.2 dm³/s
- resilience: below 15%
- tensile strength: above 100 kPa
- elongation at break: above 150%.
wherein the polyurethane foam contains ecological raw materials in the amount of 5-20 wt.% of the foam.

11. The polyurethane foam according to claim 10, wherein the foam is a viscoelastic foam, preferably a block viscoelastic foam.
